# EUROPEAN PATENT APPLICATION

(11) **EP 4 757 001 A1**
(43) Date of publication of application: **10.06.2026**
(21) Application number: 25807858.3
(22) Date of filing: 30.04.2025
(51) Int. Cl.: H01M 10/6553, H01M 50/534

(54) **ELECTRODE ASSEMBLY WITH IMPROVED HEAT DISSIPATION, BATTERY CELL, AND BATTERY MODULE COMPRISING SAME**

(30) Priority: 22.05.2024 KR 20240066397
(71) Applicant: LG Energy Solution, Ltd., Seoul 07335 (KR)
(72) Inventor: LIM, Seongha, Daejeon 34122 (KR); KIM, Hyehyeon, Daejeon 34122 (KR); KIM, Jonghak, Daejeon 34122 (KR)
(74) Representative: Goddar, Heinz J.
(86) International application number: PCT/KR2025/005879
(87) International publication number: WO 2025/244317

(57) **Abstract**

An electrode assembly according to an embodiment of the present disclosure includes a positive electrode, a negative electrode, a separator disposed between the positive electrode and the negative electrode, and an electrode lead connected to the positive electrode or the negative electrode. The electrode lead includes a lower lead layer, an intermediate lead layer disposed on the lower lead layer, and an upper lead layer disposed on the intermediate lead layer. The electrode assembly according to an embodiment of the present disclosure and a battery cell including the same may improve heat generation by maintaining existing sealing process parameters and using a material having a high thermal conductivity.

## Description

### [TECHNICAL FIELD]

The present disclosure relates to an electrode lead, an electrode assembly, a battery cell including the same, and a battery module including the same, and more specifically, relates to an electrode lead with improved heat generation, an electrode assembly, a battery cell, and a battery module including the same.

### [BACKGROUND ART]

Unlike primary batteries that cannot be recharged, secondary batteries may be charged and discharged, and are used not only in portable devices but also in electric vehicles (EVs) and hybrid electric vehicles (HEVs) which are driven by electrical power sources.

Types of currently widely used secondary batteries include lithium ion batteries, lithium polymer batteries, nickel cadmium batteries, nickel hydrogen batteries, nickel zinc batteries, and the like. An operating voltage of these unit secondary battery cells, that is, unit battery cells, is approximately 2.5 V to 4.6 V. Therefore, when a higher output voltage is required, a battery pack is formed by connecting multiple battery cells in series. In addition, depending on charge/discharge capacity required for the battery pack, the battery pack is formed by connecting multiple battery cells in parallel. Therefore, the number of the battery cells included in the battery pack may be set in various ways, depending on the required output voltage or the required charge/discharge capacity.

When a battery pack is formed by connecting multiple battery cells in series or in parallel, the following method is generally used. A battery module including at least one battery cell, preferably multiple battery cells, is first formed, and thereafter, a battery pack is formed by using at least one battery module and adding other components. Here, the battery module means a component in which multiple battery cells are connected in series or in parallel, and the battery pack means a component in which multiple battery modules are connected in series or in parallel to increase capacity and an output.

There is a problem that a temperature of a cell lead rises to 80 degrees or higher when the battery cell forming the battery module is charged and discharged by applying a high current. In a case of copper (Cu) mainly used in a cathode lead, a temperature of a lead portion is similar even when a thickness of the copper is smaller than a thickness of aluminum (Al) mainly used in an anode lead, due to a high thermal conductivity of the copper. When the thickness of the positive lead increases, sealing process conditions need to be changed, and assembly problems such as a leakage may arise. Therefore, it is desirable to seek for a method for controlling heat generation while the thickness is maintained.

### [DETAILED DESCRIPTION OF INVENTION]

### [TECHNICAL PROBLEMS]

The present disclosure aims to provide an electrode assembly and a battery cell which can improve heat generation while maintaining existing sealing process parameters.

### [TECHNICAL SOLUTION]

An electrode assembly according to an embodiment of the present disclosure includes an anode, a cathode, a separator disposed between the anode and the cathode, and an electrode lead connected to the anode or the cathode. The electrode lead includes a lower lead layer, an intermediate lead layer disposed on the lower lead layer, and an upper lead layer disposed on the intermediate lead layer.

In addition, the lower lead layer may be made of a first metal.

In addition, the upper lead layer may be made of the first metal.

In addition, the first metal may be aluminum.

In addition, the intermediate lead layer may be made of a second metal different from the first metal, and the second metal may have a higher thermal conductivity than the first metal.

In addition, the second metal may be copper or nickel-plated copper.

In addition, a thickness of the intermediate lead layer may be 0.5 to 5 times a thickness of the upper lead layer, and a thickness of the intermediate lead layer may be 0.5 to 5 times a thickness of the lower lead layer.

In addition, the lower lead layer or the upper lead layer of the electrode lead may be connected to an anode tab of the anode.

In addition, the electrode lead may further include side surface portions covering both side surfaces of the intermediate lead layer.

In addition, an upper end of the side surface portion may be connected to the upper lead layer, and a lower end of the side surface portion may be connected to the lower lead layer.

In addition, the thickness of the side surface portion may gradually decrease outward.

In addition, wherein the side surface portion may be formed integrally with the upper lead layer and the lower lead layer.

In addition, the side surface portion may be made of the same first metal as the upper lead layer and the lower lead layer.

According to an embodiment of the present disclosure, a battery cell includes an electrode assembly, and a cell case accommodating the electrode assembly. The electrode assembly includes an anode, a cathode, a separator disposed between the anode and the cathode, and an electrode lead connected to the anode or the cathode. The electrode lead includes a lower lead layer, an intermediate lead layer disposed on the lower lead layer, and an upper lead layer disposed on the intermediate lead layer.

### [EFFECT OF INVENTION]

An electrode assembly and a battery cell including the same according to an embodiment of the present disclosure can improve heat generation by maintaining existing sealing process parameters and using a material having a high thermal conductivity. In addition, a temperature of the battery cell may be controlled during charging and discharging.

### [BRIEF DESCRIPTION OF THE DRAWING]

FIG. 1 is a perspective view of a battery module according to an embodiment of the present disclosure.
FIG. 2 is an exploded perspective view of the battery module according to an embodiment of the present disclosure.
FIG. 3 is a perspective view of a terminal busbar in an embodiment of the present disclosure.
FIG. 4 is a perspective view of an insulating cover and an end plate in an embodiment of the present disclosure.
FIG. 5 is a plan view of a battery cell in an embodiment of the present disclosure.
FIG. 6 is a view illustrating an interior of a pouch-type battery cell in an embodiment of the present disclosure.
FIG. 7 is a view illustrating an electrode assembly in an embodiment of the present disclosure.
FIG. 8 is a cross-sectional view of an electrode lead portion of the electrode assembly in an embodiment of the present disclosure.
FIG. 9 is a detailed view of the electrode lead portion in an embodiment of the present disclosure.
FIG. 10 is a view of a battery pack according to an embodiment of the present disclosure.
FIG. 11 is a perspective view of a vehicle equipped with the battery pack in an embodiment of the present disclosure.

### [BEST MODE FOR CARRYING OUT THE INVENTION]

Advantages and features of the present disclosure and methods for achieving the advantages and the features will become apparent by referring to embodiments described in detail below together with the accompanying drawings. Meanwhile, the present disclosure is not limited to the embodiments disclosed below, and may be implemented in various different forms. The present embodiments are provided only to make the present disclosure complete and to fully inform those skilled in the art to which the present disclosure pertains of the scope of the invention. The present disclosure is defined only by the scope of the appended claims. Accordingly, in some embodiments, well-known process steps, well-known device structures, and well-known techniques are not described in detail to avoid ambiguous interpretation of the present disclosure. The same reference numerals refer to the same components throughout the specification.

In order to clearly represent multiple layers and regions in the drawings, a thickness may be enlarged. The same drawing reference numerals are assigned to similar elements throughout the specification. When it is described that a portion such as a layer, a film, a region, and a plate is present "above" another portion, this description includes not only a case where a portion is present "directly above" another portion, but also a case where still another portion is present therebetween. Conversely, when it is described that a portion is present "directly above" another portion, the description may mean that no other portion is present therebetween. In addition, when it is described that a portion such as a layer, a film, a region, and a plate is present "below" another portion, this description includes not only a case where a portion is present "directly below" another portion, but also a case where still another portion is present therebetween. Conversely, when it is described that a portion is present "directly below" another portion, the description may mean that no other portion is present therebetween.

An electrode lead, an electrode assembly, a battery cell 110, and a battery module 1000 according to a preferred embodiment of the present disclosure will be described in detail with reference to the drawings.

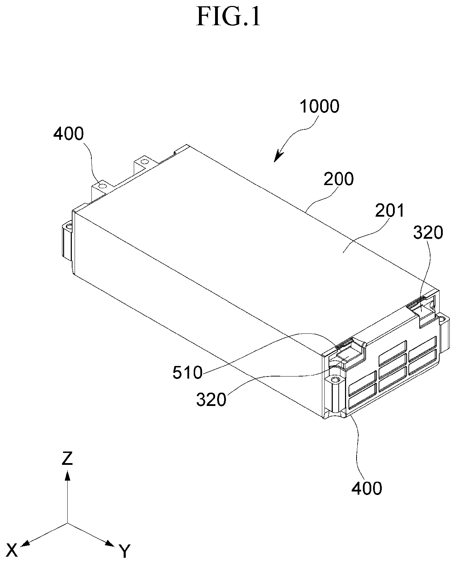

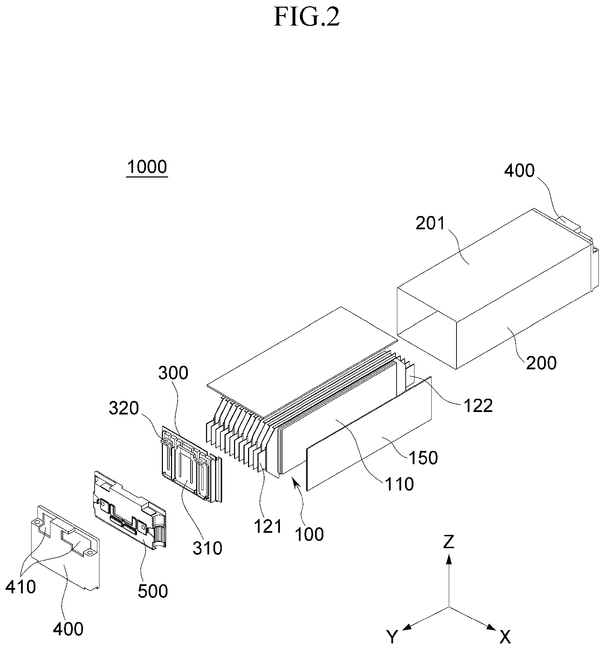

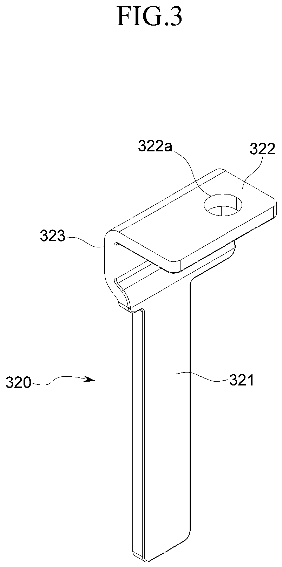

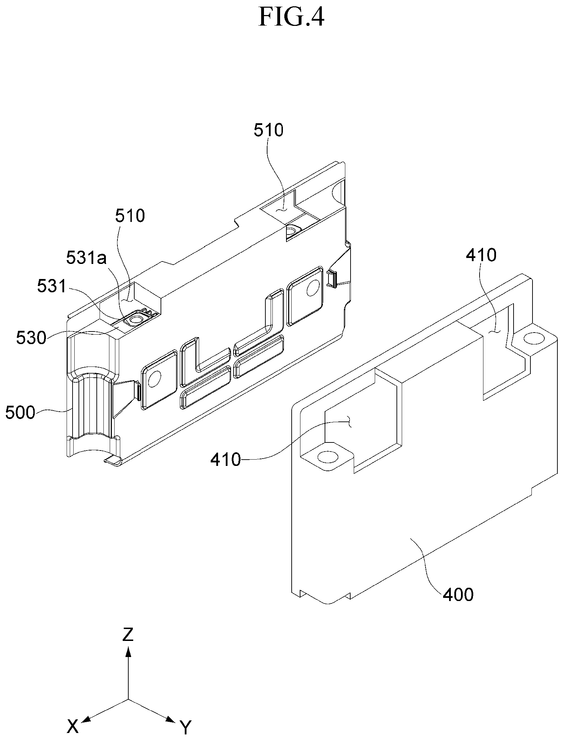

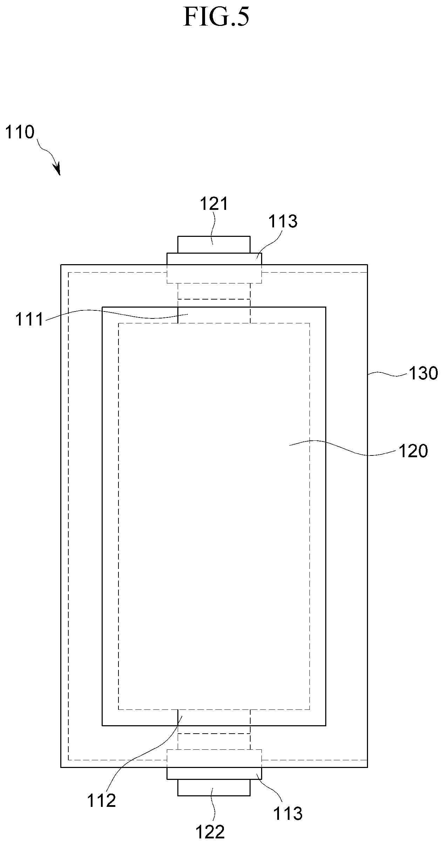

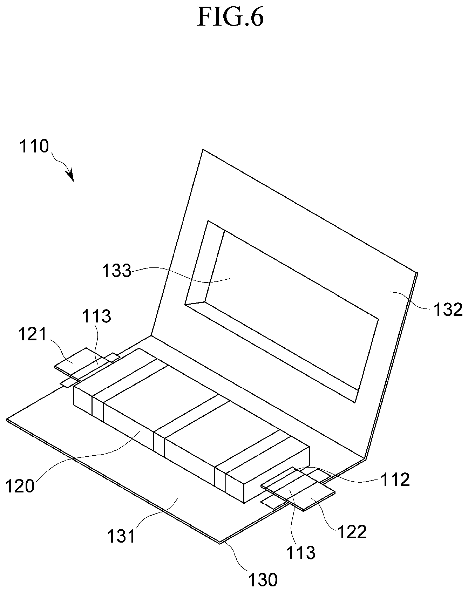

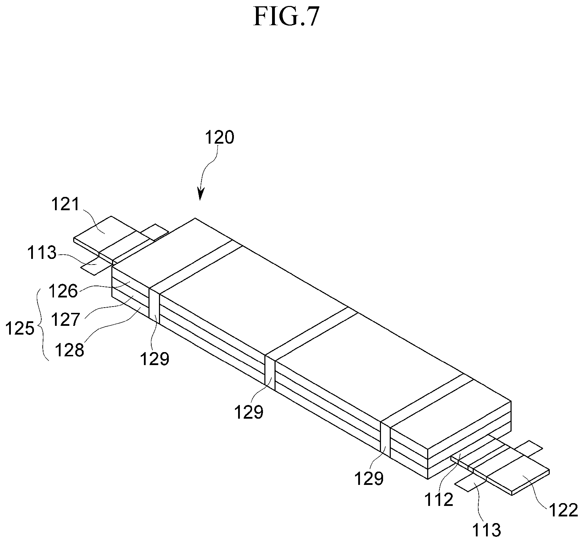

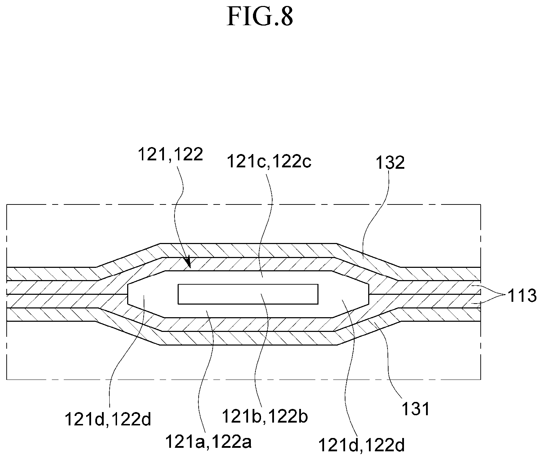

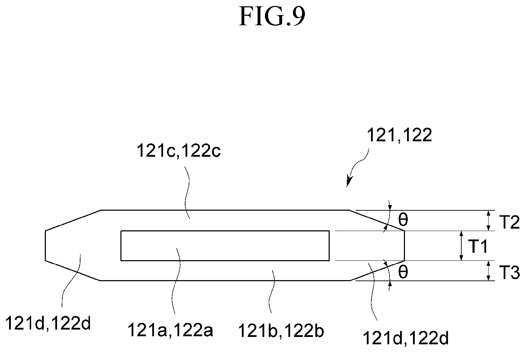

FIG. 1 is a perspective view of a battery module according to an embodiment of the present disclosure, FIG. 2 is an exploded perspective view of the battery module according to an embodiment of the present disclosure, FIG. 3 is a perspective view of a terminal busbar in an embodiment of the present disclosure, FIG. 4 is a perspective view of an insulating cover and an end plate in an embodiment of the present disclosure, FIG. 5 is a plan view of a battery cell in an embodiment of the present disclosure, FIG. 6 is a view illustrating an interior of a pouch-type battery cell in an embodiment of the present disclosure, FIG. 7 is a view illustrating an electrode assembly in an embodiment of the present disclosure, FIG. 8 is a cross-sectional view of an electrode lead portion of the electrode assembly in an embodiment of the present disclosure, and FIG. 9 is a detailed view of the electrode lead portion in an embodiment of the present disclosure.

The battery module 1000 according to an embodiment of the present disclosure may include a battery cell stack 100 in which a plurality of the battery cells 110 are stacked, a module case 200 accommodating the battery cell stack 100, a busbar frame 300 located on one surface and/or the other surface of the battery cell stack 100, an insulating cover 500 disposed outside the busbar frame 300, and an end plate 400 disposed outside the insulating cover 500.

The battery cell stack 100 may be formed by stacking the plurality of battery cells 110 along one direction, and the plurality of battery cells 110 may be electrically connected. A direction in which the plurality of battery cells 110 are stacked may be an X-axis direction (or -X-axis direction) in FIG. 2.

A direction from a front surface to a rear surface of the battery cell stack 100, or a direction opposite thereto may be defined as a length direction of the battery cell stack 100, and may be a Y-axis direction in the drawing. In addition, a direction from an upper surface to a lower surface of the battery cell stack 100 or a direction opposite thereto may be defined as a width direction of the battery cell stack 100, and may be a Z-axis direction in the drawing.

The length direction of the battery cell stack 100 may be substantially the same as the length direction of the battery cell 110. Electrode leads 121 and 122 of the battery cell 110 may be located on the front surface and the rear surface of the battery cell stack 100. Busbars 310 and 320 of the battery module 1000 may be disposed close to the front surface and the rear surface of the battery cell stack 100 to easily form an electrical connection with the electrode leads 121 and 122. The battery cell 110 will be described later.

The module case 200 may be provided to protect the battery cell stack 100 and electrical components connected thereto from external physical impact, and the module case 200 may accommodate the battery cell stack 100 and the electrical components connected thereto in an internal space of the module case 200.

A structure of the module case 200 may be selected in various ways, and for example, the structure of the module case 200 may be a mono-frame structure. Here, the mono-frame may be in a form of a metal plate in which an upper surface, a lower surface, and both side surfaces are integrated. The mono-frame may be manufactured by extrusion molding. As another example, the structure of the module case 200 may be a structure in which a U-shaped frame and a top plate (top plate, 201) are combined. In a case of the structure in which the U-shaped frame and the top plate 201 are combined, the structure of the module case 200 may be formed by combining the top plate 201 to an upper side of the U-shaped frame as a metal plate in which a lower plate and both side surfaces are integrated or combined. Each frame or plate may be manufactured by press molding. In addition, the structure of the module case 200 may be provided as an L-shaped frame structure in addition to the mono-frame or the U-shaped frame 210, and may be provided as various structures not described in the above-described examples.

The structure of the module case 200 may be provided in an open form in a length direction of the battery cell stack 100. A front surface and a rear surface of the battery cell stack 100 may not be covered by the module case 200. The electrode leads 121 and 122 of the battery cells 110 may not be covered by the module case 200. The front surface and the rear surface of the battery cell stack 100 may be covered by a busbar frame 300, an end plate 400, or busbars 310 and 320 (to be described later). Through this configuration, the front surface and the rear surface of the battery cell stack 100 may be protected from external physical impacts or the like.

A compression pad 150 may be located between the battery cell stack 100 and one side surface of inner surfaces of the module case 200.

The compression pad 150 may be disposed to face the battery cell 110 located in an outermost end of the battery cell stack 100 in the X-axis direction in the drawing.

In addition, a thermally conductive resin may be injected between the battery cell stack 100 and the inner surface of the module case 200, and a thermally conductive resin layer 610 may be formed between the battery cell stack 100 and one surface of the inner surfaces of the module case 200 by the injected thermally conductive resin. In this case, the thermally conductive resin layer 610 may be located on the Z-axis of the battery cell stack 100, and may be formed between the battery cell stack 100 and a lower plate located on the - Z-axis of the module case 200.

The busbar frame 300 is located on one surface of the battery cell stack 100, and may guide connection between the battery cell stack 100 and an external device while covering one surface of the battery cell stack 100. Specifically, the busbar frame 300 may be located on the front surface or the rear surface of the battery cell stack 100 as illustrated, and may also be located on the upper surface, the lower surface, or the side surface. At least one of the busbars 310 and 320 and a module connector may be mounted on the busbar frame 300. As illustrated in FIG. 2, one surface of the busbar frame 300 may be connected to one surface or the other surface of the battery cell stack 100, and the other surface of the busbar frame 300 may be connected to the busbars 310 and 320.

The busbar frame 300 may include an electrically insulating material. The busbar frame 300 may restrict contact between the busbars 310 and 320 and other portions of the battery cells 110 other than portions joined to the electrode leads 121 and 122, thereby preventing occurrence of electrical short circuits.

The busbar frame 300 may be located on each of one side and the other side of the battery cell stack 100.

The busbars 310 and 320 are mounted on one surface of the busbar frame 300, and may be used to electrically connect the battery cell stack 100 or the battery cells 110 and an external device circuit. A plurality of the busbars 310 and 320 may be disposed, and may be located between the battery cell stack 100 or the busbar frame 300 and the end plate 400. In this manner, the busbars 310 and 320 may be protected from the external impacts or the like, thereby minimizing a possibility that durability deteriorates due to external moisture or the like.

The busbars 310 and 320 may be electrically connected to the battery cell stack 100 through the electrode leads 121 and 122 of the battery cell 110.

Specifically, the electrode leads 121 and 122 of the battery cells 110 may be bent and connected to the busbars 310 and 320 after passing through a lead slit formed in the busbar frame 300. The battery cells 110 forming the battery cell stack 100 may be connected in series or in parallel by the busbars 310 and 320.

The busbars 310 and 320 may include a terminal busbar 320 for electrically connecting one battery module 1000 to another battery module 1000. At least a portion of the terminal busbar 320 may be exposed outward of the end plate 400 to be connected to another battery module 1000, and the end plate 400 may be provided with a terminal opening portion 410 for this exposure.

One end portion (second portion 322) of the terminal busbar 320 may be exposed through an opening portion 510 of the insulating cover 500 and a terminal opening portion 410 of the end plate 400.

As illustrated in FIG. 3, the terminal busbar 320 may include a first portion 321 connected to electrode leads 121 and 122 of the battery cell 110 and the second portion 322 exposed outward through the terminal opening portion 410. In addition, the terminal busbar 320 may further include a bending portion 323 formed between the first portion 321 and the second portion 322.

In the terminal busbar 320, the first portion 321 may be connected to the second portion 322 through the bending portion 323, and one surface of the first portion 321 and one surface of the second portion 322 may be perpendicular to each other. That is, the bending portion 323 is formed in the terminal busbar 320, the second portion 322 may protrude to be seated in a seating portion 530 of the insulating cover 500, and the second portion 322 may be electrically connected to an inter busbar (not illustrated). A joining hole 322a is formed in the second portion 322 forming one end portion of the terminal busbar 320, and the second portion 322 of the terminal busbar 320 is fixed by a fixing pin (not illustrated) inserted into the joining hole 322a.

The end plate 400 may cover an open surface of the module case 200 to protect the battery cell stack 100 and electrical components connected thereto from external physical impacts. For this purpose, the end plate 400 may be manufactured by using a material having predetermined strength, and for example, the end plate 400 may include a metal such as aluminum or a plastic material.

The end plate 400 may have terminal opening portions 410. The terminal opening portions 410 may be disposed on both sides of the end plate 400, and a portion of the insulating cover 500 and one end portion (second portion 322) of the terminal busbar 320 may be exposed through the terminal opening portions 410.

A connector opening portion may be located between terminal opening portions 410 located on both sides of the end plate 400, and a module connector may be exposed outward through the connector opening portion.

The end plate 400 may be joined to the module case 200 while covering the busbar frame 300 or the busbars 310 and 320 located on one surface of the battery cell stack 100. Each corner of the end plate 400 may be joined to a corresponding corner of the module case 200 by welding, bolt fastening, hook fastening, or the like.

The end plates 400 may be respectively located on one surface and the other surface of the module case 200 to cover both surfaces of the battery cell stack 100. In the present embodiment, an example in which the end plates 400 are located on the front surface and the rear surface of the module case 200 is illustrated.

In addition, an insulating cover 500 for electrical insulation may be located between the end plate 400 and the busbar frame 300. That is, the busbar frame 300, the insulating cover 500, and the end plate 400 may be sequentially located outward from the battery cell stack 100. As in the end plate 400, a plurality of the busbar frames 300 and a plurality of the insulating covers 500 may be formed.

The insulating cover 500 may include an electrical insulating material, and may block contact between the busbars 310 and 320 and the end plate 400.

The insulating cover 500 may include an opening portion 510 and a seating portion 530. The opening portions 510 may be located on both sides of the upper portion of the insulating cover 500, and one end portion (second portion 322) of the terminal busbar 320 may be exposed through the opening portion 510.

A connector opening portion may be located between the opening portions 510 located on both sides of the insulating cover 500, and a module connector may be exposed outward through the connector opening portion.

The insulating cover 500 may be located on an inner surface of the end plate 400, and may be in close contact with the inner surface of the end plate 400, but may not necessarily be in close contact with the inner surface of the end plate 400.

As described above, one end portion (second portion 322) of the terminal busbar 320 may be exposed through the opening portion 510, and the exposed one end portion (second portion 322) of the terminal busbar 320 may be seated on the seating portion 530. Accordingly, the seating portion 530 may be disposed adjacent to the opening portion 510, and may be disposed on an outer surface of the upper portion.

The second portion 322 of the terminal busbar 320 may be seated on an upper surface of the seating portion 530, and accordingly, the upper surface of the seating member 530 may form a seating surface. In addition, as illustrated in FIG. 4, the seating member 530 may include a fixing member 531 for fixing the terminal busbar 320.

The fixing member 531 may fix the second portion 322 of the terminal busbar 320, and may include a fixing hole 531a.

A fixing pin (not illustrated) may be inserted into the fixing hole 531a. The fixing pin (not illustrated) inserted into the joining hole 322a formed in the second portion 322 of the terminal busbar 320 is joined and fixed to the fixing hole 531a. In this manner, the second portion 322 of the terminal busbar 320 may be fixed to the insulating cover 500.

Accordingly, the second portion 322 of the terminal busbar 320 is seated on the seating portion 530 of the insulating cover 500, and the second portion 322 is seated on and comes into contact with the fixing member 531 disposed on the seating portion 530.

A terminal cover portion (not illustrated) covering one end portion (second portion 322) of the exposed terminal busbar 320 may be disposed in the insulating cover 500.

As illustrated in FIGS. 5 to 7, the battery cell 110 in the present embodiment may be provided as a pouch-type battery cell, and the number of pouch-type battery cells stacked per unit area may be maximized. However, the battery cell 110 is not necessarily provided in a pouch shape, and may be provided in a square shape, a cylindrical shape, or other various forms.

The battery cell 110 provided in the pouch type may include an electrode assembly 120 and a cell case 130 accommodating the electrode assembly 120.

The cell case 130 of the battery cell 110 may be a pouch-type cell case 130 for accommodating the electrode assembly 120. The cell case 130 may include a lower case 131 and an upper case 132 covering the lower case 131, and the upper and lower cases 132 and 131 may be formed integrally with each other. In addition, as illustrated in FIG. 6, a connecting portion between the upper and lower cases 132 and 131 may be bent to form a folded structure. For convenience, in order to illustrate an interior of the pouch-type battery cell 110, FIG. 6 illustrates a state where the upper case 132 is located at a position where the upper portion of the lower case 131 is open. However, in an actual finished product, as in FIG. 5, the upper case 132 may completely cover the lower case 131, and a sealing portion S may be formed in a peripheral portion thereof.

Both the upper and lower cases 132 and 131 may be formed as a laminate structure including an inner covering layer, a metal layer, and an outer covering layer. The inner covering layer is located inside the cell case 115 with reference to the metal layer, and is in direct contact with the electrode assembly 120. Accordingly, the inner covering layer needs to have insulation and electrolytic resistance. In addition, in order to be sealed from the outside, the inner covering layer needs to have sealing properties, that is, a sealing portion where inner layers are thermally bonded needs to have excellent thermal bonding strength. A material of the inner covering layer may be selected from polyolefin resins such as polypropylene, polyethylene, polyethylene acrylic acid, and polybutylene polyurethane resins, and polyimide resins which have excellent chemical resistance and satisfactory sealing properties. As the material of the inner covering layer, it is preferable to select polypropylene (PP) which has excellent mechanical properties such as tensile strength, rigidity, surface hardness, and impact resistance, and chemical resistance.

The metal layer is located between the inner covering layer and the outer covering layer, and corresponds to a barrier layer for preventing moisture or various gases from entering the inside of the battery from the outside. A preferable material for the metal layer in contact with the inner covering layer is an aluminum (Al) thin film which is light in weight and has excellent formability.

The outer covering layer is located outside the cell case 130 with reference to the metal layer, and this outer covering layer may use a heat-resistant polymer having excellent tensile strength, moisture permeation preventing ability, and air permeation preventing ability to ensure heat resistance and chemical resistance while protecting the electrode assembly. For example, nylon or polyethylene terephthalate may be used.

An accommodation groove 133 may be formed in each of the upper and lower cases 132 and 131, and the electrode assembly may be accommodated inside the accommodation groove 133 of the upper and lower cases 132 and 131.

The electrode assembly 120 accommodated in the cell case 130 may be one selected from a group including a jelly-roll type electrode assembly having a structure in which a separator is interposed and wound between a long sheet-shaped anode and a long sheet-shaped cathode, a stack type electrode assembly including unit cells having a structure in which rectangular anodes and cathodes are stacked with a separator interposed therebetween, a stack-folding type electrode assembly in which the unit cells are wound by a long separator film, and a lamination-stack type electrode assembly in which the unit cells are stacked with a separator interposed therebetween and laminated to each other.

In the present disclosure, as an example, as illustrated in FIG. 7, the electrode assembly 120 may include an electrode stack 125 and a fixing tape 129 for winding the electrode stack 125.

The electrode stack 125 may include an anode 126, a cathode 128, and a separator 127 disposed between the anode 126 and the cathode 128, and may be formed by stacking the anode 126, the separator 127, and the cathode 128. In addition, the electrode stack 125 may have a form in which a length in a total length direction is relatively longer than a length in a width direction.

The positive electrode may include an positive current collector and a first active material layer disposed on the positive current collector, and the first active material layer may be formed by applying an electrode active material to one surface or both surfaces of the positive current collector.

The negative electrode may include a negative current collector and a second active material layer disposed on the negative current collector, and the second active material layer may be formed by applying an electrode active material to one surface or both surfaces of the negative current collector.

The fixing tape 129 is used for fixing the electrode stack 125 in which the positive electrode 126, the separator 127, and the negative electrode 128 are stacked, and is fixed by winding the outside of the electrode stack 125.

The electrode stack 125 may include a plurality of the positive electrodes 126, a plurality of the negative electrodes 128, and a plurality of the separators 127.

In addition, the electrode assembly 120 may include two electrode tabs 111 and 112 and two electrode leads 121 and 122.

The electrode tabs 111 and 112 are formed to protrude outward from the electrode stack 125. One electrode tab 111 of the two electrode tabs 111 and 112 may be an positive tab connected (extended) to the positive electrode 126, and the other electrode tab 112 may be a negative tab connected (extended) to the negative electrode 128.

The electrode leads 121 and 122 are connected to the electrode tabs 111 and 112, and may be connected to the electrode tabs 111 and 112 by welding, as an example. A material of the electrode leads 121 and 122 may be used without any particular limitation as long as an electrically conductive material is used. For example, the material of the electrode leads 121 and 122 may include at least one of copper (Cu), aluminum (Al), nickel (Ni), iron (Fe), carbon (C), chromium (Cr), and manganese (Mn). However, the material of the electrode leads 121 and 122 is not limited to the above-described materials, and may be selected in various ways in view of mechanical strength, flexibility, and processability.

A welding portion may be formed by vertically overlapping prescribed portions of the electrode leads 121 and 122 and the electrode tabs 111 and 112, and the electrode tabs 111 and 112 and the electrode leads 121 and 122 may be connected to each other by this welding portion.

In the two electrode leads 121 and 122, one electrode lead 121 may be an positive lead connected to the positive tab, and the other electrode lead 122 may be a negative lead connected to the negative tab. As an example, the positive lead may be made of aluminum, and as an example, the negative lead may be made of copper or nickel-coated copper. However, the configuration is not limited thereto.

As illustrated in FIGS. 5 to 7, a lead film 113 may be attached to each of the electrode leads 121 and 122. The lead film 113 joined to the electrode leads 121 and 122 is located between the electrode leads 121 and 122 and the cell case 130 to prevent occurrence of short circuits between the electrode leads 121 and 122 and the cell case 130 and to improve sealing strength, thereby preventing a leakage of an electrolyte or the like.

The lead film 113 may have the following form. A pair of lead films 113 are located on both sides of each of the electrode leads 121 and 122. Thereafter, portions which do not come into contact with the electrode leads 121 and 122 are joined by a method such as heat fusion, and surround the electrode leads 121 and 122. After the cell case 130 is sealed, a portion of the lead film 113 may be formed to protrude outward of the cell case 130 to advantageously prevent the short circuits.

In the drawing, the two electrode leads 121 and 122 are respectively disposed on both sides of the electrode assembly 120, but may be disposed on one side of the electrode assembly 120 depending on the disposition of the electrode tabs 111 and 112. That is, when the two electrode tabs 111 and 112 are disposed on one side of the electrode assembly 120, the two electrode leads 121 and 122 connected to the electrode tabs 111 and 112 may also be formed in the same direction of the electrode assembly 120.

FIG. 8 is a cross-sectional view (cross-section along the width direction of the electrode leads 121 and 122 (horizontal direction in FIG. 5)) of electrode leads 121 and 122 covered with the cell case 130 in the electrode assembly 120 according to an embodiment of the present disclosure. In an embodiment of the present disclosure, the electrode leads 121 and 122 may be leads in which two or more types of materials (metals) are joined. That is, the electrode leads 121 and 122 may be made of a clad metal.

As illustrated, the electrode leads 121 and 122 may include lower lead layers 121a and 122a, intermediate lead layers 121b and 122b, and upper lead layers 121c and 122c, and may have a three-layer structure in this way.

Specifically, the lower lead layers 121a and 122a may be made of a first metal, and may be formed in a form of a thin metal sheet. As an example, the first metal may be aluminum (Al) or a metal including aluminum (Al). Without being limited thereto, the lower lead layers 121a and 122a may be made of another metal.

The intermediate lead layers 121b and 122b may be disposed between the lower lead layers 121a and 122a and the upper lead layers 121c and 122c. The lower surfaces of the intermediate lead layers 121b and 122b may be bonded to the lower lead layers 121a and 122a, and the upper surfaces of the intermediate lead layers 121b and 122b may be bonded to the upper lead layers 121c and 122c.

The intermediate lead layers 121b and 122b may be made of a second metal different from the first metal, and may have a form of a thin metal sheet. As an example, the second metal may be copper (Cu) or nickel-plated copper, or may be a metal including copper (Cu) or nickel-plated copper. Without being limited thereto, the intermediate lead layers 121b and 122b may be made of another metal. The second metal may have higher thermal conductivity than the first metal. The second metal may have thermal conductivity which is equal to or higher than 1.5 times thermal conductivity of the first metal. In this way, in the present embodiment, since the metal having high thermal conductivity is disposed in the intermediate lead layers 121b and 122b, heat generation of the whole electrode leads 121 and 122 may be improved.

The upper lead layers 121c and 122c may be disposed on the intermediate lead layers 121b and 122b, and the lower surfaces of the upper lead layers 121c and 122c may be bonded to the intermediate lead layers 121b and 122b. The upper lead layers 121c and 122c may be made of the first metal, and may have a form of a thin metal sheet. That is, the upper lead layers 121c and 122c may be made of the same first metal as the lower lead layers 121a and 122a. As an example, the upper lead layers 121c and 122c may be made of aluminum (Al) or a metal including aluminum (Al). However, without being limited thereto, the upper lead layers 121c and 122c may be made of another metal. Lateral widths of the upper lead layers 121c and 122c and the lower lead layers 121a and 122a may be larger than lateral widths of the intermediate lead layers 121b and 122b.

The thicknesses of the upper lead layers 121c and 122c may be the same as the thicknesses of the lower lead layers 121a and 122a. The thicknesses of the intermediate lead layers 121b and 122b may be a value obtained by subtracting a sum of the thicknesses of the upper lead layers 121c and 122c and the lower lead layers 121a and 122a from a total thickness of the target electrode leads 121 and 122. Accordingly, as the thicknesses of the upper lead layers 121c and 122c and the lower lead layers 121a and 122a increase, the thicknesses of the intermediate lead layers 121b and 122b may decrease.

In FIG. 9, a thickness T1 of the intermediate lead layers 121b and 122b may be 0.5 to 5 times, 1 to 4 times, or 2 to 3 times thicknesses T2 (or T3) of the upper lead layers 121c and 122c (or the lower lead layers 121a and 122a). The thickness T1 of the intermediate lead layers 121b and 122b may be 0.2 to 0.8, 0.3 to 0.7, or 0.4 to 0.6 times a total thicknesses T1+T2+T3 of the all electrode leads. The thickness T1 of the intermediate lead layers 121b and 122b may be 0.3 to 3 times, 0.5 to 2 times, or 0.7 to 1.5 times the sum of the thickness T2 of the upper lead layers 121c and 122c and the thickness T3 of the lower lead layers 121a and 122a.

For example, when the total thickness of the electrode leads is 0.6 T (mm), and the thicknesses of the upper lead layers 121c and 122c and the lower lead layers 121a and 122a are each 0.1 T, the thickness of the intermediate lead layers 121b and 122b may be 0.4 T. When the thicknesses of the upper lead layers 121c and 122c and the lower lead layers 121a and 122a are each 0.2 T, the thickness of the intermediate lead layers 121b and 122b may be 0.2 T.

One electrode lead 121 of the electrode leads 121 and 122 may be the positive lead, and may be formed by bonding the upper lead layers 121c and 122c and lower lead layers 121a and 122a made of aluminum, and the intermediate lead layers 121b and 122b made of copper or nickel-plated copper therebetween. In this case, aluminum is disposed on upper and lower sides of the copper in a portion of the electrode lead 121 exposed outward of the cell case 130 to prevent oxidation or corrosion of the copper. In addition, when the electrode tab 111 as the positive tab is made of aluminum, the electrode tab 111 may be connected to the upper lead layers 121c and 122c or the lower lead layers 121a and 122a which are made of aluminum. Therefore, joining strength obtained by homogeneous bonding may be strengthened.

The electrode lead 122 may be the negative lead, and may be made of copper or nickel-plated copper.

As described above, in the present embodiment, the electrode leads have a structure in which the intermediate lead layers 121b and 122b made of copper or nickel-plated copper are disposed between the upper lead layers 121c and 122c and the lower lead layers 121a and 122a which are made of aluminum. Accordingly, heat generation may be improved by using a material having high thermal conductivity while maintaining the thickness and maintaining existing sealing process parameters.

Meanwhile, in the present embodiment, as illustrated in FIG. 8, the electrode leads 121 and 122 may include side surface portions 121d and 122d respectively covering both side surfaces of the intermediate lead layers 121b and 122b.

Each of the side surface portions 121d and 122d is disposed on one side surface of the intermediate lead layers 121b and 122b. An upper end of the side surface portions 121d and 122d may be connected to the upper lead layers 121c and 122c, and a lower end of the side surface portions 121d and 122d may be connected to the lower lead layers 121a and 122a.

As illustrated, each of the side surface portions 121d and 122d may be formed to have the thickness which gradually decreases outward (in a direction away from the side surface of the intermediate lead layers 121b and 122b). Accordingly, the lead film 113 or the cell cases 131 and 132 disposed in the electrode leads may be in close contact with the electrode leads 121 and 122. An angle θ at which the side surface portions 121d and 122d are inclined on the upper surface of the upper lead layers 121c and 122c (or the lower lead layers 121a and 122a) may be 10 to 45 degrees or 10 to 30 degrees (refer to FIG. 9).

The side surface portions 121d and 122d may be made of the first metal. That is, the side surface portions 121d and 122d may be made of the same metal as the upper lead layers 121c and 122c and the lower lead layers 121a and 122a, and the side surface portions 121d and 122d may be formed integrally with the upper lead layers 121c and 122c and the lower lead layers 121a and 122a. The side surface portions 121d and 122d may respectively cover both side surfaces of the intermediate lead layers 121b and 122b to prevent oxidation or corrosion of the intermediate lead layers 121b and 122b.

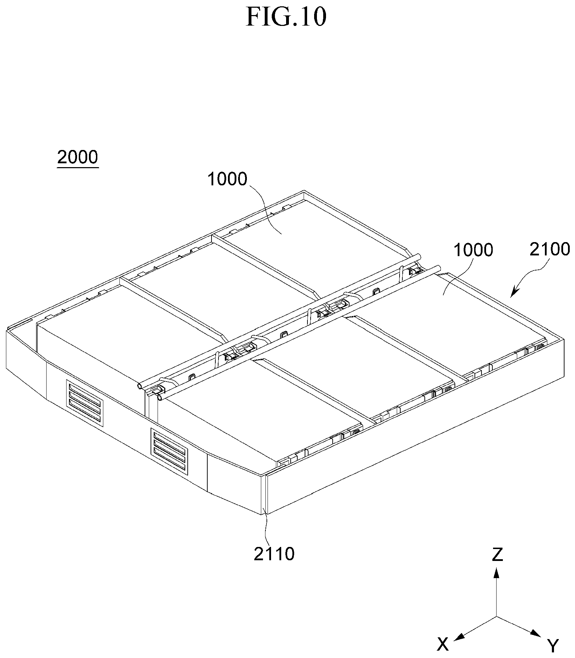

One or more battery modules 1000 according to the present disclosure as described above may form a battery pack 2000. As illustrated in FIG. 10, the battery pack 2000 according to an embodiment of the present disclosure may accommodate at least one battery module 1000 inside a pack case 2100, and may include various control and protection systems such as a Battery Management System (BMS) and a cooling system.

The pack case 2100 may include a lower housing 2110 and an upper housing (not illustrated) joined to the upper side of the lower housing 2110, and a plurality of the battery modules 1000 may be accommodated in internal spaces of the lower housing 2110 and the upper housing.

Meanwhile, in an embodiment of the present disclosure, an example in which the plurality of battery modules 1000 are accommodated inside the battery pack 2000 is illustrated, but the plurality of battery cells 110 may be directly disposed inside the battery pack 2000.

The battery module 1000 and the battery pack 2000 according to the present disclosure configured in this way may be applied to various devices. Specifically, the battery module 1000 and the battery pack 2000 may be applied to transporting means such as electric bicycles, electric vehicles V, hybrid vehicles, or an Energy Storage System (ESS). However, without being limited thereto, the battery module 1000 and the battery pack 2000 may be applied to various devices which can use secondary batteries.

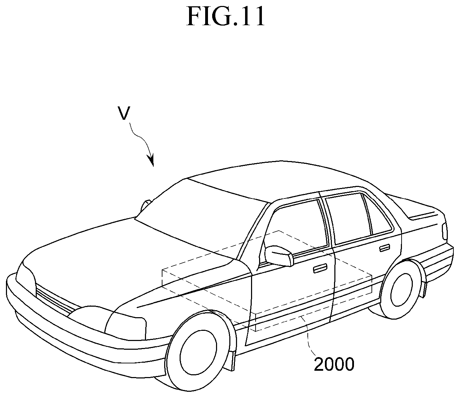

Fig. 11 is a view illustrating the electric vehicle V equipped with the battery pack 2000. In the electric vehicle V, wheels are driven by a motor receiving power supply from the battery pack 2000. In this manner, the electric vehicle V may be operated.

The present disclosure has been described above with reference to preferred embodiments. Meanwhile, without being limited to the above-described embodiments, various modifications and corrections may be made by those skilled in the art to which the invention pertains within the scope that does not depart from the concept of the present disclosure.

### [INDUSTRIAL APPLICABILITY]

The present disclosure may provide an electrode assembly and a battery cell which may maintain existing sealing process parameters, may improve heat generation, and may control temperatures of the battery cell during charging and discharging.

## Claims

1. An electrode assembly comprising:
a positive electrode;
a negative electrode;
a separator disposed between the positive electrode and the negative electrode; and
an electrode lead connected to the positive electrode or the negative electrode,
wherein the electrode lead includes a lower lead layer, an intermediate lead layer disposed on the lower lead layer, and an upper lead layer disposed on the intermediate lead layer.

2. The electrode assembly of claim 1, wherein the lower lead layer is made of a first metal.

3. The electrode assembly of claim 2, wherein the upper lead layer is made of the first metal.

4. The electrode assembly of claim 3, wherein the first metal is aluminum.

5. The electrode assembly of claim 3, wherein the intermediate lead layer is made of a second metal different from the first metal, and the second metal has a higher thermal conductivity than the first metal.

6. The electrode assembly of claim 5, wherein the second metal is copper or nickel-plated copper.

7. The electrode assembly of claim 5, wherein a thickness of the intermediate lead layer is 0.5 to 5 times a thickness of the upper lead layer, and the thickness of the intermediate lead layer is 0.5 to 5 times a thickness of the lower lead layer.

8. The electrode assembly of claim 4, wherein the lower lead layer or the upper lead layer of the electrode lead is connected to a positive tab of the positive electrode.

9. The electrode assembly of claim 1, wherein the electrode lead further includes side surface portions covering opposite side surfaces of the intermediate lead layer, respectively.

10. The electrode assembly of claim 9, wherein an upper end of each side surface portion is connected to the upper lead layer, and a lower end of each side surface portion is connected to the lower lead layer.

11. The electrode assembly of claim 10, wherein a thickness of the side surface portion gradually decreases outward.

12. The electrode assembly of claim 10, wherein each side surface portion is formed integrally with the upper lead layer and the lower lead layer.

13. The electrode assembly of claim 12, wherein each side surface portion is made of the same first metal as the upper lead layer and the lower lead layer.

14. The electrode assembly of claim 13, wherein the first metal is aluminum.

15. A battery cell comprising:
an electrode assembly; and
a cell case accommodating the electrode assembly,
wherein the electrode assembly includes a positive electrode, a negative electrode, a separator disposed between the positive electrode and the negative electrode, and an electrode lead connected to the positive electrode or the negative electrode, and the electrode lead includes a lower lead layer, an intermediate lead layer disposed on the lower lead layer, and an upper lead layer disposed on the intermediate lead layer.

16. The battery cell of claim 15, wherein the lower lead layer is made of a first metal.

17. The battery cell of claim 16, wherein the upper lead layer is made of the first metal.

18. The battery cell of claim 17, wherein the first metal is aluminum.

19. The battery cell of claim 17, wherein the intermediate lead layer is made of a second metal different from the first metal, and the second metal has a higher thermal conductivity than the first metal.

20. The battery cell of claim 19, wherein the second metal is copper or nickel-plated copper.

21. The battery cell of claim 15, wherein the electrode lead further includes side surface portions covering opposite side surfaces of the intermediate lead layer, respectively.

22. The battery cell of claim 21, wherein a thickness of each side surface portion gradually decreases outward.

23. A battery module comprising:
a plurality of the battery cells of claim 15.
